# FASCICULE DE BREVET EUROPEEN

(11) **EP 3 765 364 B1**
(45) Date de publication et mention de la délivrance du brevet: **23.11.2022**
(21) Numéro de dépôt: 19709960.9
(22) Date de dépôt: 13.03.2019
(51) Int. Cl.: B64C 27/26, B64C 27/08

(54) **PROCÉDURE DE MANOEUVRE D'UN AÉRODYNE HYBRIDE DE TYPE VTOL OU STOL**
VERFAHREN ZUM BETREIBEN EINES HYBRIDEN AERODYNEN VOM VTOL- ODER STOL-TYP
PROCEDURE FOR OPERATING A HYBRID AERODYNE OF THE VTOL OR STOL TYPE

(30) Priorité: 13.03.2018 FR 1852172
(43) Date de publication de la demande: 20.01.2021
(73) Titulaire: Innostar, 92320 Chatillon (FR)
(72) Inventeur: SIMON, Jean-Michel, 92320 CHATILLON (FR); ROESCH, Philippe, 13100 AIX EN PROVENCE (FR)
(74) Mandataire: Lavialle, Bruno François Stéphane
(86) Numéro de dépôt international: PCT/EP2019/056318
(87) Numéro de publication internationale: WO 2019/175264

(56) Documents cités:
- EP-A1- 2 468 627
- WO-A1-2017/021608
- DE-A1-102009 015 805
- DE-C- 383 661
- US-A- 2 247 034
- US-B1- 7 490 792

## Description

L'invention concerne un aérodyne hybride à décollage et/ou atterrissage vertical ou court, du type drone de taille moyenne, et vol de croisière à grande vitesse et/ou de grande portée. Cet aérodyne est du type équipé d'une voilure fixe avec un système propulseur pour vol de croisière et d'une voilure tournante pour les phases de vol vertical, apte à être immobilisée en vol de croisière. On entend par taille moyenne un aérodyne dont l'une des exigences principales est une autonomie de vol importante par exemple pour des missions de surveillance côtière.

### ARRIERE PLAN DE L'INVENTION

L'invention s'inscrit dans un état de la technique nombreux et varié comme par exemple celui rappelé dans le document WO2017021608.

L'idée d'utiliser, pour la phase de vol verticale (décollage et atterrissage), une ou des mono pales dans des concepts de « stop rotor » hybrides VTOL (acronyme anglo-saxon pour décollage et atterrissage vertical) est une idée très ancienne. En effet, une mono pale présente, de façon évidente, un intérêt vis-à-vis de la traînée de la voilure tournante quand la rotation de celle-ci est arrêtée et la minimisation de la traînée est un problème à résoudre dans ce genre de machines volantes si l'on souhaite atteindre des vitesses importantes en allure de croisière.

Aucun de ces systèmes n'a réellement été développé et commercialisé. On pense que les raisons qui ont conduit à l'échec de ces systèmes, et qui font mieux comprendre l'intérêt de la présente invention, sont les suivantes :
- dans le cas où la voilure tournante doit être aérodynamiquement « cachée » en vol horizontal, les mécanismes proposés sont trop complexes, et l'opération comporte des phases d'instabilité aérodynamique au moment où la voilure est mise à l'abri, après le décollage et la transition en vol de croisière et au moment où elle est découverte pour l'atterrissage,
- dans le cas où le rotor n'est pas caché et laissé libre dans le flux d'air (ou vent relatif) en vol de croisière, de deux choses l'une pour avoir une puissance de décollage satisfaisante :
   soit disposer d'un diamètre du rotor important, et, par conséquent, une longueur de pale assez grande qui conduit à des instabilités au moment de l'arrêt et/ou de la remise en rotation du rotor, quand le rotor perd l'effet stabilisateur de la force centrifuge. En effet, les pales d'un rotor, pour être efficaces aérodynamiquement, doivent être relativement fines et donc relativement souples, et présenter de bonnes performances d'aéroélasticité, telles que celles des pales de rotors d'hélicoptères modernes,
   soit mettre en œuvre des pales plus courtes et plus rigides, donc plus stables, mais alors la puissance nécessaire pour assurer la sustentation est très élevée, ce qui nuit à l'intérêt du concept.

L'invention concerne un aérodyne comprenant au moins deux mono-pales, espacés longitudinalement le long de l'axe de roulis de l'appareil, comme par exemple illustré par les figures 16a et 16b du document WO2017021608.

Ces figures représentent schématiquement, respectivement en vol stationnaire ou vertical et en vol horizontal ou de croisière, un aérodyne comprenant une voilure fixe supportée par un fuselage, qui supporte également une voilure mobile de sustentation en vol vertical, et dont la rotation est arrêtée en fin de phase de transition du vol vertical au vol horizontal de croisière à grande vitesse.

La voilure mobile comporte deux mono-pales contrarotatives dont les axes de rotation sont décalés l'un de l'autre le long de l'axe de roulis de l'aérodyne. En vol de croisière chacune des mono-pales est orientée longitudinalement vers l'arrière de l'aérodyne, seuls les contrepoids et les parties rigides qui les supportent étant dirigés vers l'avant de leur mât rotor respectif.

L'invention a pour but d'optimiser de manière réaliste les performances d'un aérodyne de ce type.

L'amélioration des performances tient pour une part dans la mise en œuvre de moyens pour améliorer ses allures dans les périodes de transition entre vol vertical et vol horizontal, après le décollage et avant l'atterrissage.

### OBJET DE L'INVENTION

A cet effet, l'invention a pour objet une procédure de manœuvre d'un aérodyne hybride comprenant un fuselage, une voilure fixe, un système propulsif comprenant au moins un propulseur pour vol de croisière et une voilure tournante pour les phases de vol vertical et apte à être immobilisée en vol de croisière de l'aérodyne, la voilure tournante étant apte à produire de la portance par sa rotation en phase de vol vertical et à être immobilisée et stockée longitudinalement en phase de vol de croisière, du type comportant au moins deux mono-pales contrarotatives à contrepoids situées au sommet du fuselage, les mono-pales étant articulées autour d'un axe perpendiculaire à l'axe de rotation du rotor, sensiblement au niveau dudit axe de rotation du mât rotor, cette procédure comportant entre une phase de vol vertical et une phase de vol de croisière une phase de transition, caractérisée en ce que dans cette phase de transition tant que la vitesse de chaque mono pale est inférieure à un seuil de vitesse de rotation de l'ordre de 60% de la vitesse de rotation nominale, le pas de chaque mono pale est tel qu'il n'y a plus aucun effort de portance et l'articulation transversale de la mono pale sur l'arbre rotor est maintenue bloquée dans une position telle que la mono pale est perpendiculaire à l'arbre rotor.

De manière plus complète, la procédure selon l'invention de manœuvre de cet aérodyne comporte les phases suivantes :
a/ Décollage vol vertical:
   - Démarrage en rotation de la voilure tournante sous un pas collectif nul,
   - Libération des articulations des mono-pales au-delà d'un certain seuil de rotation (60% de la vitesse nominale),
   - Augmentation de la vitesse de rotation jusqu'à la vitesse de rotation nominale,
   - Augmentation du pas collectif des pales pour permettre le décollage,
   - Mise en route du système propulsif (à n'importe quel moment pendant cette phase) sans engendrer de poussée, le pas des hélices étant réglé pour être sans effet à cet égard,
b/ Transition décollage/croisière :
   - Augmentation du pas des hélices du système propulsif,
   - Annulation du pas des pales de la voilure tournante et diminution de la vitesse de rotation de cette voilure,
   - Blocage de l'articulation transversale des mono pales au rotor,
   - Arrêt de la rotation et indexation mécanique de la position d'arrêt de chaque pale,
c/ Vol de croisière sous la poussée du système propulsif de croisière.
d/ Transition vol de croisière/vol vertical d'atterrissage.
   - Diminution de la poussée du système propulsif de croisière jusqu'à atteindre une vitesse légèrement supérieure à la vitesse de décrochage (par exemple 20% au-dessus de celle-ci),
   - Mise en rotation des pales sous pas nul et articulation bloquée,
   - Déblocage des articulations des pales au-delà d'une vitesse minimale de rotation, (par exemple 60% de la vitesse de rotation nominale),
   - Augmentation de la vitesse de rotation jusqu'à la vitesse nominale, puis augmentation du pas,
   - Arrêt du propulseur de croisière ou réglage du pas d'hélice de manière à ne pas engendrer de poussée,
e/ Vol vertical d'atterrissage semblable à tout appareil à voilure tournante.

Il conviendra de synchroniser ces commandes de propulsion avec une hybridation les commandes de vol et en mode « hélicoptère - vol vertical - » et en mode « avion - vol de croisière » pour assurer à l'appareil une transition douce et sans à-coup entre les commandes « rotors » pour le vol stationnaire (à la fin du vol vertical ascendant ou au début du vol vertical descendant) et les commandes « gouvernes » pour le vol de croisière. On aura défini un coefficient de mixage ou d'hybridation K = _{Min}[(V/Vs)²;1] avec V, la vitesse de croisière de l'avion et Vs, sa vitesse de décrochage. On notera que les commandes de gouvernes resteront actives pendant le vol vertical.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- la figure 1 illustre un exemple de machine volante conforme à l'invention dans sa configuration de vol vertical,
- la figure 2 illustre la machine de la figure 1 en vol de croisière,
- la figure 3 est une vue de côté de l'appareil de l'invention en vol vertical,
- la figure 4 est la même vue de côté que celle de la figure 3, l'appareil étant en allure de croisière,

### DESCRIPTION DETAILLEE DE L'INVENTION

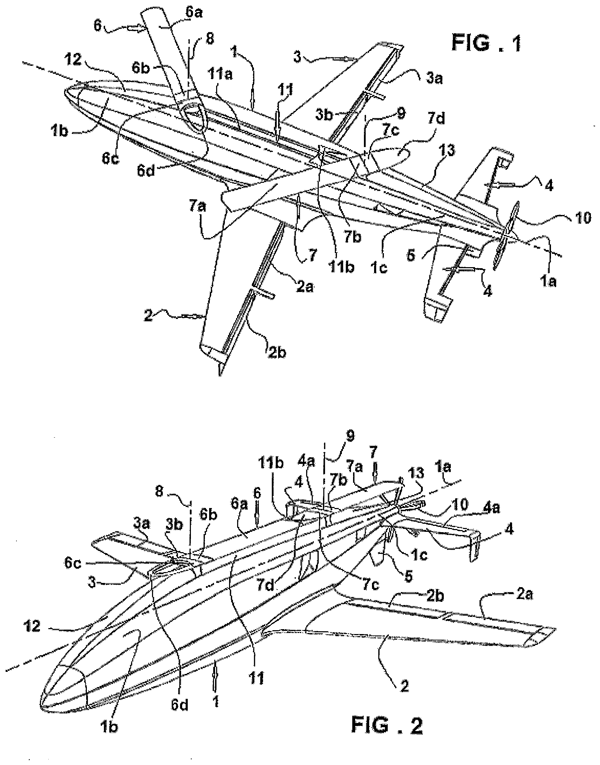

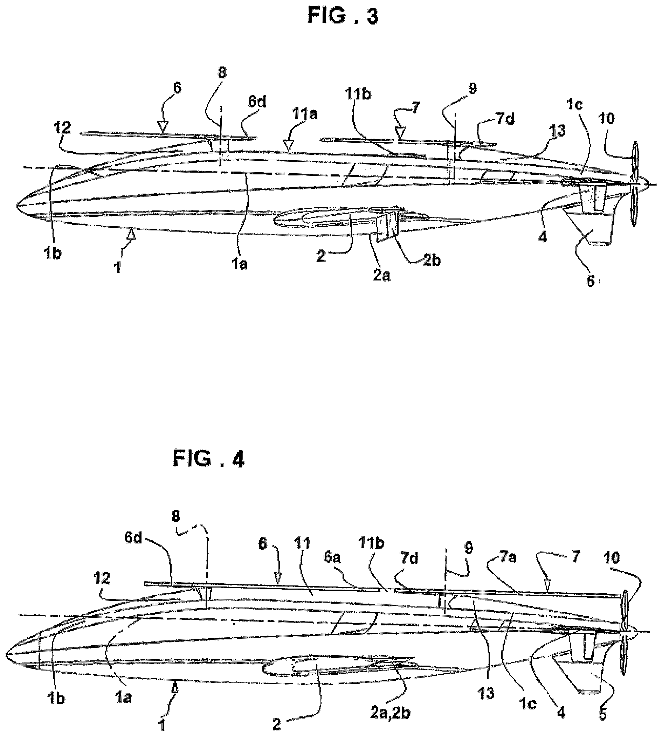

L'aérodyne représenté aux figures comporte un fuselage 1 dont l'axe de roulis est noté la. Ce fuselage est équipé d'une voilure fixe comportant une aile principale 2, 3, un empennage 4 en U inversé et une dérive 5, tout cela de manière usuelle et bien connue de l'homme de métier. On aura noté que l'aile 2, 3 possède respectivement des volets 2a, 2b, 3a, 3b, rabattus aux figures 1 et 3, et en service aux figure 2 et 4. De manière connue, les branches horizontales de l'empennage comportent également des volets 4a.

Dans le mode de réalisation représenté à ces figures, l'aérodyne selon l'invention comporte une mono-pale avant 6 et une mono-pale arrière 7. La mono-pale avant 6 comprend une pale active 6a qui génère une portance pendant sa rotation. Cette mono-pale est composée d'une première partie 6b qui porte ladite pale active et constitue la liaison de la pale active à un mât rotor 8 et une deuxième partie 6c qui porte le contrepoids 6d et relie ce dernier au mât rotor 8. On notera que la partie 6c et le contrepoids 6d sont évidés pour améliorer leurs performances aérodynamiques.

L'ensemble ainsi constitué par la pale active 6a et la partie rigide 6b qui la porte est articulé autour d'un axe transversal, perpendiculaire à l'axe de rotation du rotor, sensiblement au niveau dudit axe de rotation du mât rotor. Cette disposition est connue en elle-même et rappelée dans le document WO2017021608 déjà cité.

La mono-pale 7 arrière est de même constitution que la pâle 6 avec une pale active 7a, un contrepoids 7d et des partie rigides 7b et 7c de liaison de ces deux éléments à un mât rotor 9.

A l'arrière du fuselage, l'aérodyne possède un propulseur 10 (par exemple à hélices) destiné à produire une poussée lors du vol de croisière.

On constate, sur les figures 2 et 4, que chacune des mono-pales est orientée longitudinalement vers l'arrière de l'aérodyne, seuls les contrepoids et les parties rigides qui les supportent étant dirigés vers l'avant de leur mât rotor 8, 9 respectif.

Dans cet exemple de réalisation de l'aérodyne, un élément de structure 11 est situé au sommet du fuselage et est mobile par rapport à ce dernier entre une position d'effacement vers la surface externe du fuselage de manière à affleurer cette surface ou demeurer au voisinage de celle-ci - en tout cas écartée de la voilure tournante - et une position de service en saillie de cette surface du fuselage. La position d'effacement est représentée aux figures 1 et 3. La position de service est celle représentée aux figures 2 et 4. L'aérodyne est en vol vertical aux figures 1 et 3, les mono-pales tournent en synchronisme de manière contra rotative à partir d'une position de départ précise qui est celle des figures 2 et 4 où elles sont immobilisées longitudinalement au-dessus du fuselage 1. Dans ces dernières figures l'aérodyne est représenté en vol sensiblement horizontal (vol de croisière). La voilure tournante est, pour cette allure, un handicap en ce qui concerne la traînée de l'appareil car cette dernière engendre d'importantes perturbations aérodynamiques et de nombreuses turbulences du vent relatif.

L'élément 11 en saillie du fuselage constitue un élément de calage de la partie 6a de la mono-pale dans une position strictement alignée avec la direction du vent relatif en vol de croisière. Sa dimension longitudinale permet qu'il soit en appui sous le contrepoids 7d de la pale 7, affermissant l'alignement de celle-ci avec la pale qui la précède. Enfin il possède un relief 11b qui vient se loger entre l'extrémité de la pale 6 et l'extrémité du contrepoids 7d de la pale 7, comblant ainsi la solution de continuité de surface qui nécessairement existe entre les deux pales.

Selon une autre caractéristique de l'aérodyne, le fuselage 1 présentant une partie avant 1b plongeante par rapport à son axe de roulis 1a, le mât rotor 8 de la mono-pale avant 6 est situé sensiblement à la jonction de cette partie avec la partie principale du fuselage. Cette partie plongeante 1b est équipée d'une protubérance fixe 12 profilée, dans l'axe de l'élément 11 pour favoriser encore un meilleur écoulement aérodynamique.

De manière analogue le fuselage 1 présentant une partie arrière 1c, également plongeante par rapport à son axe de roulis 1a, le mât rotor 9 de la mono-pale 7 arrière est situé sensiblement à la jonction de cette partie avec la partie principale du fuselage. Cette partie plongeante 1c est équipée d'une protubérance fixe 13 profilée, dans le prolongement de l'élément 11 pour favoriser aussi l'écoulement aérodynamique.

Le fonctionnement de l'aérodyne selon l'invention se déroule selon la procédure suivante.

On identifiera cinq allures de vol : la phase décollage vertical, la phase de transition entre vol vertical et vol de croisière, la phase de vol de croisière, la phase de transition entre vol de croisière et vol vertical d'atterrissage et la phase de vol vertical d'atterrissage.

La particularité de cette procédure tient aux deux phases transitoires. En effet, les moyens mis en œuvre dans l'invention permettent que chacune de ces phases transitoires entre le vol de croisière et l'un des deux vols verticaux ascendant et descendant passent par un état où :
la vitesse de rotation de la voilure tournante est supérieure à 60% de la vitesse de rotation nominale, le pas de chaque mono pale est réduit jusqu'à ce qu'il n'y ait plus aucun effort de portance et l'articulation transversale de chaque mono pale sur l'arbre rotor est bloquée dans une position telle que la mono pale soit perpendiculaire à l'arbre rotor. Il faut entendre par vitesse nominale la vitesse de rotation de la voilure tournante qui permet le décollage de l'appareil. En outre la valeur de 60% donnée ci-dessus est indicative d'une vitesse de rotation qui doit être suffisante pour que la pale soit très peu sensible, par l'effet de sa tension interne engendrée par la force centrifuge, à des efforts « parasites » (coups de vent latéraux,....) comme, par exemple, qui ont des effets sur l'appareil d'autant plus importants que la vitesse du vol de croisière est réduite pendant cette phase de transition, rendant ainsi la machine plus sensible aux variations de son environnement.

Ainsi la procédure complète se déroule de la manière suivante :
a/ Décollage vol vertical:
   - Démarrage en rotation de la voilure tournante 6,7 sous un pas collectif nul,
   - Libération des articulations des mono-pales au-delà d'un certain seuil de rotation (60% de la vitesse nominale) pour qu'une force centrifuge suffisante rende la mono pale indéformable sous l'effet de forces aérodynamiques parasites,
   - Augmentation de la vitesse de rotation jusqu'à la vitesse de rotation nominale,
   - Augmentation du pas collectif des pales 6,7 pour permettre le décollage,
   - Mise en route du système propulsif 10 (à n'importe quel moment pendant cette phase) avec un pas d'hélice réglé sans engendrer de poussée,
b/ Transition décollage/croisière :
   - Augmentation du pas d'hélice du système propulsif 10,
   - Annulation du pas des pales de la voilure tournante et diminution de la vitesse de rotation de cette voilure,
   - Blocage de l'articulation transversale des mono pales au rotor, tant que la vitesse de rotation engendre une force centrifuge suffisante pour s'opposer à la flexion de la mono-pale sous son propre poids ou pour résister à des forces aérodynamiques intempestives,
   - Arrêt de la rotation et indexation mécanique de la position d'arrêt de chaque pale,(on notera à ce propos que l'indexation des pales dans leur position de stockage sera assurée par tout moyen mécanique motorisé mis en œuvre après l'arrêt de leur rotation de vol).
c/ Vol de croisière sous la poussée du système 10.
d/ Transition vol de croisière, vol vertical d'atterrissage.
   - Diminution de la poussée du propulseur 10 jusqu'à atteindre une vitesse légèrement supérieure à la vitesse de décrochage (par exemple 20% au-dessus de celle-ci),
   - Abaissement de l'élément 11 et libération des pales,
   - Mise en rotation des pales sous pas nul et articulations bloquées,
   - Déblocage des articulations des pales au-delà d'une vitesse minimale de rotation, (par exemple 60% de la vitesse de rotation nominale),
   - Augmentation de la vitesse de rotation jusqu'à la vitesse nominale, puis augmentation du pas,
   - Arrêt du propulseur 10 ou maintien en rotation avec un pas d'hélice réglé sans engendrer de poussée,
e/ Vol vertical d'atterrissage semblable à tout appareil à voilure tournante.

Cette procédure de manœuvre implique également une hybridation des commandes des moyens de portance que constituent la voilure tournante et la voilure fixe pendant la phase de transition entre les deux allures de vol. En mode VTOL (vol vertical) les gouvernes "avions" seront actives et se substitueront progressivement aux commandes de désengagement du "rotor" avec l'augmentation de la vitesse jusqu'à la transition ou elles assureront seules, le contrôle de la machine (le pas des pales étant nul) en vol de croisière. De la même manière cette hybridation assure que les commandes de réengagement du rotor sont activées progressivement dans la phase de transition entre le vol de croisière et le vol vertical d'atterrissage.

En mode VTOL les gouvernes "avions" seront actives et se substitueront progressivement aux commandes "rotor" avec l'augmentation de la vitesse jusqu'à la transition ou elles assureront seules le contrôle de l'appareil (le pas des pales étant nul). Dans ce qui suit, v en indice devant une variable indique que cette variable est un vecteur.
Soit ᵥ*x* le vecteur "positions des commandes de pilotage" {manche longitudinal, latéral, palonnier, levier de pas collectif, pas de l'hélice}
Soit ᵥ*yR* le vecteur "positions des servocommandes rotor" {collectif différentiel, latéral, collectif, latéral différentiel, pas collectif général, pas de l'hélice}
Soit ᵥ*x* → *ᵥyR*(0*;*ᵥ*x*) les lois définissant la cinématique des commandes de pas "rotor" en vol stationnaire(V=0)
Soit ᵥ*yA*, le vecteur "positions des gouvernes avion" {profondeur, direction, ailerons, pas hélice}
Soit ᵥ*x* → ᵥ*yA*(1;ᵥ*x*) les lois définissant la cinématique de commande des gouvernes "avion" pour V ≥ Vs .(V étant la vitesse de l'appareil en mode avion et Vs la vitesse de décrochage).

En considérant l'hybridation des commandes de vol "avion" et "hélicoptère" définie en fonction de la vitesse par: *ᵥyR(K ;ᵥx*)=(1-*K*)*ᵥyR*(0;ᵥ*x*) et ᵥ*yA*(*K*;ᵥ*x*)=*K*ᵥ*yA*(1;ᵥ*x*)
Où *K*=*Min*[(*V*/*VS*)²;1] désigne le coefficient de "mixage" ou d'hybridation 0≤K≤1 entre les gouvernes "avion" et les gouvernes "rotor" que l'on choisit égal au ratio de portance de l'aile.

On vérifie que le pas des pales s'annule bien à la transition quelle que soit la position des commandes de vol ᵥ*yR*(1;ᵥ*x*)=ᵥ0 et que la transition entre les commandes "rotor" en vol stationnaire (K=0) et les gouvernes "avion" (K=1) en vol de croisière V≥Vs s'effectue de façon douce et sans à-coups.

L'invention n'est pas limitée à l'exemple décrit mais couvre toute variante de réalisation entrant dans le cadre des revendications.

## Revendications

1. Procédure de manœuvre d'un aérodyne hybride comprenant un fuselage (1), une voilure fixe (2,3,4,5), un propulseur (10) pour vol de croisière et une voilure tournante (6,7) pour les phases de vol vertical et apte à être immobilisée en vol de croisière de l'aérodyne, la voilure tournante étant apte à produire de la portance par sa rotation en phase de vol vertical et à être immobilisée et stockée longitudinalement en phase de vol de croisière, du type comportant au moins deux mono pales (6,7) contrarotatives à contrepoids situées au sommet du fuselage (1), les mono-pales étant articulées autour d'un axe perpendiculaire à l'axe de rotation du rotor, sensiblement au niveau dudit axe de rotation du mât rotor, cette procédure comportant entre une phase de vol vertical et une phase de vol de croisière une phase de transition, **caractérisée en ce que** dans cette phase de transition, tant que la vitesse de chaque mono pale (6,7) est inférieure à un seuil de vitesse de rotation de l'ordre de 60% de la vitesse de rotation nominale, le pas de chaque mono pale est tel qu'il n'y a plus aucun effort de portance et l'articulation transversale de la mono pale sur l'arbre rotor est maintenue bloquée dans une position telle que la mono pale est perpendiculaire à l'arbre rotor.

2. Procédure selon la revendication 1, **caractérisée en ce qu'**elle comporte les phases suivantes :
a/ Décollage vol vertical:
. Démarrage en rotation de la voilure tournante (6,7) sous un pas collectif nul et articulation transversale bloquée,
. Libération de l'articulation des mono-pales au-delà d'un certain seuil de rotation sensiblement égal à 60% de la vitesse nominale,
. Augmentation de la vitesse de rotation jusqu'à la vitesse de rotation nominale,
. Augmentation du pas collectif des pales pour permettre le décollage,
. Mise en route du système propulseur (10) sans engendrer de poussée,
b/ Transition décollage/croisière :
. Augmentation du pas des hélices du système propulsif,
. Annulation du pas des pales de la voilure tournante et diminution de la vitesse de rotation de cette voilure,
. Blocage de l'articulation transversale des mono pales au rotor,
. Arrêt de la rotation et indexation mécanique de la position d'arrêt de chaque pale,
c/ Vol de croisière sous la poussée du système propulsif de croisière.
d/ Transition vol de croisière/vol vertical d'atterrissage.
. Diminution de la poussée du système propulseur (10) de croisière jusqu'à atteindre une vitesse légèrement supérieure à la vitesse de décrochage,
. Mise en rotation des pales sous pas nul et articulation transversale bloquée,
. Déblocage de l'articulation transversale des pales au-delà d'une vitesse minimale de rotation de l'ordre de 60% de la vitesse de rotation nominale,
. Augmentation de la vitesse de rotation jusqu'à la vitesse nominale, puis augmentation du pas,
. Arrêt du propulseur de croisière ou maintien en rotation avec un pas d'hélice réglé sans engendrer de poussée,
e/ Vol vertical d'atterrissage semblable à tout appareil à voilure tournante.

3. Procédure de manœuvre selon la revendication 2, **caractérisée en ce qu'**en phase de transition entre un vol de croisière et un vol vertical, on procède à une hybridation des commandes de vol vertical et des commandes de vol de croisière qui fait intervenir dans les diverses équations d'asservissement de ces commandes, un coefficient de mixage K tel que K = (V/Vs)² dans lequel V est la vitesse de l'appareil en mode avion et Vs sa vitesse de décrochage, ce coefficient étant borné à la valeur 1 au-dessus de la vitesse de décrochage et égal à 0 lors des vols verticaux de l'appareil.

4. Procédure de manœuvre selon la revendication 3, **caractérisée en ce que** pendant les phases de transition vol vertical / vol de croisière, les commandes de vol avion sont proportionnelles à K et les commandes de vol vertical, proportionnelles à (1-K).

## Patentansprüche

1. Verfahren zum Manövrieren eines hybriden strömungsgetragenen Luftfahrzeugs, das einen Rumpf (1), einen starren Flügel (2, 3, 4, 5), einen Antrieb (10) für Reiseflug und einen sich drehenden Flügel (6, 7) für die Senkrechtflugphasen umfasst, der dazu geeignet ist, im Reiseflug des strömungsgetragenen Luftfahrzeugs festgestellt zu werden, wobei der sich drehende Flügel dazu geeignet ist, durch seine Rotation in der Senkrechtflugphase den Auftrieb zu erzeugen und in der Reiseflugphase festgestellt und in Längsrichtung aufbewahrt zu werden, vom Typ, der mindestens zwei gegenläufige Einzelblätter (6, 7) mit Gegengewichten umfasst, die sich auf der Oberseite des Rumpfes (1) befinden, wobei die Einzelblätter um eine zur Rotationsachse des Rotors senkrechte Achse angelenkt sind, im Wesentlichen im Bereich der genannten Rotationsachse des Rotormastes, wobei dieses Verfahren zwischen einer Senkrechtflugphase und einer Reiseflugphase eine Übergangsphase umfasst, **dadurch gekennzeichnet, dass** in dieser Übergangsphase, solange die Geschwindigkeit jedes Einzelblattes (6, 7) niedriger als ein Rotationsgeschwindigkeitsschwellenwert in der Größenordnung von 60% der nominalen Rotationsgeschwindigkeit ist, die Steigung jedes Einzelblattes derart ist, dass es keine Auftriebskraft mehr bereitstellt und die Quergelenkverbindung des Einzelblattes auf der Rotorwelle derart in einer Position blockiert gehalten wird, dass das Einzelblatt senkrecht zur Rotorwelle ist.

2. Verfahren nach Anspruch 1, **dadurch gekennzeichnet, dass** es die folgenden Phasen umfasst:
a/ Senkrechtstart:
. Rotationsbeginn des sich drehenden Flügels (6, 7) unter einer kollektiven Nullsteigung und blockierter Quergelenkverbindung,
. Freigabe der Gelenkverbindung der Einzelblätter jenseits eines bestimmten Rotationsschwellenwerts, der im Wesentlichen gleich 60% der nominalen Geschwindigkeit ist,
. Erhöhung der Rotationsgeschwindigkeit bis auf die nominale Rotationsgeschwindigkeit,
. Erhöhung der kollektiven Steigung der Blätter zum Ermöglichen des Abhebens,
. Inbetriebnahme des Antriebssystems (10) ohne Erzeugen von Schub,
b/ Übergang Start/Reiseflug:
. Erhöhung der Steigung der Propeller des Antriebssystems,
. Aufhebung der Steigung der Blätter des sich drehenden Flügels und Verringerung der Rotationsgeschwindigkeit dieses Flügels,
. Blockierung der Quergelenkverbindung der Einzelblätter am Rotor,
. Anhalten der Rotation und mechanische Indexierung der Anhalteposition jedes Blattes,
c/ Reiseflug unter dem Schub des Reiseflugantriebssystems.
d/ Übergang Reiseflug/Senkrechtlandung.
. Verringerung des Schubs des Reiseflugantriebssystems (10) bis zum Erreichen einer Geschwindigkeit, die leicht höher als die Überziehgeschwindigkeit ist,
. In-Rotation-Versetzen der Blätter unter Nullsteigung und blockierter Quergelenkverbind ung,
. Entriegeln der Quergelenkverbindung der Blätter jenseits einer minimalen Rotationsgeschwindigkeit in der Größenordnung von 60% der nominalen Rotationsgeschwindigkeit,
. Erhöhung der Rotationsgeschwindigkeit bis zur nominalen Geschwindigkeit, dann Erhöhung der Steigung,
. Stoppen des Reiseflugantriebs oder Halten in Rotation mit einer geregelten Propellersteigung ohne Erzeugen von Schub,
e/ Senkrechtlandung ähnlich jeder Drehflügler-Flugzeugmaschine.

3. Verfahren zum Manövrieren nach Anspruch 2, **dadurch gekennzeichnet, dass** man in der Übergangsphase zwischen einem Reiseflug und einem Senkrechtflug eine Hybridisierung der Senkrechtflugsteuerungen und der Reiseflugsteuerungen durchführt, die in die verschiedenen Regelgleichungen zum Regeln dieser Steuerungen einen Mischkoeffizienten K wie K = (V/Vs)² einsetzt, wobei V die Geschwindigkeit der Flugzeugmaschine im Flugmodus und Vs ihre Überziehgeschwindigkeit ist, wobei dieser Koeffizient jenseits der Überziehgeschwindigkeit auf den Wert 1 begrenzt und während Senkrechtflügen der Flugzeugmaschine gleich 0 ist.

4. Verfahren zum Manövrieren nach Anspruch 3, **dadurch gekennzeichnet, dass** während der Übergangsphasen Senkrechtflug/Reiseflug die Flugzeugflugsteuerungen proportional zu K und die Senkrechtflugsteuerungen proportional zu (1-K) sind.

## Claims

1. A maneuvering procedure for maneuvering a hybrid aerodyne comprising a fuselage (1), a fixed wing (2, 3, 4, 5), a thruster (10) for cruising flight, and a rotary wing (6, 7) for stages of vertical flight and suitable for being held stationary during cruising flight of the aerodyne, the rotary wing being suitable for producing lift by rotating in a stage of vertical flight and for being stopped and stowed longitudinally in a stage of cruising flight, the rotary wing being the type comprising at least two contrarotating single-blades (6, 7) with counterweights, both being situated at the top of the fuselage (1), the single-blades being hinged about axis perpendicular to the rotor axis of rotation, substantially at said rotor mast axis of rotation, the procedure including a transition stage between a stage of vertical flight and a stage of cruising flight, and being **characterized in that** in the transition stage, so long as the speed of each single-blade (6, 7) is less than a threshold speed of rotation of the order of 60% of the nominal speed of rotation, the pitch of each single-blade is such that it no longer provides any lift force and the transverse hinge of the single-blade to its rotor axis is held locked in a position such that the single-blade is perpendicular to the rotor shaft.

2. A procedure according to claim 1, **characterized in that** it comprises the following stages:
• a/ Takeoff vertical flight:
• Starting rotation of the rotary wing (6, 7) with zero collective pitch and with the transverse hinges locked;
• Releasing the hinges of the single-blades above a certain speed of rotation equal to about 60% of the nominal speed;
• Increasing the speed of rotation up to the nominal speed of rotation;
• Increasing the collective pitch of the blades so as to enable takeoff; and
• Starting the propulsion system (10) (at any time during the stage) without generating thrust;
• b/ Takeoff / cruising transition:
• Increasing the pitch of the propellers of the propulsion system;
• Zeroing the pitch of the blades of the rotary wing and reducing the speed of rotation of the rotary wing;
• Locking the transverse hinges of the single-blades with the rotor; and
• Stopping rotation and mechanically indexing the stopped position of each blade;
• c/ Cruising flight under thrust from the cruising propulsion system;
• d/ Cruising flight / vertical landing flight transition:
• Reducing thrust from the cruising propulsion system (10) down to a speed slightly greater than stalling speed;
• Setting the blades into rotation at zero pitch with their transverse hinges locked;
• Unlocking the transverse hinges of the blades above a minimum speed of rotation of 60% of the nominal speed of rotation);
• Increasing the speed of rotation up to the nominal speed, and then increasing the pitch; and
• Stopping the cruise thruster or maintaining in rotation with a pitch set not to produce thrust,
• e/ Vertical landing flight similar to that of any rotary wing aircraft.

3. A maneuvering procedure according to claim 2, **characterized in that** in the transition stage between cruising flight and vertical flight, the vertical flight controls and the cruising flight controls are hybridized by applying a mixing coefficient K in the various servocontrol equations of these controls, the mixing coefficient K being such that K = (V/Vs)² where V is the speed of the aircraft in airplane mode and Vs is its stalling speed, this coefficient being bounded above the stalling speed by the value 1 and being equal to 0 during vertical flight of the aircraft.

4. A maneuvering procedure according to claim 3, **characterized in that** during stages of transition between vertical flight and cruising flight, the airplane flight controls are proportional to K and the vertical flight controls are proportional to (1-K).
